# EUROPÄISCHE PATENTANMELDUNG

(11) **EP 1 248 047 A2**
(43) Veröffentlichungstag der Anmeldung: **09.10.2002**
(21) Anmeldenummer: 02006739.3
(22) Anmeldetag: 23.03.2002
(51) Int. Cl.: F24D 3/14

(54) **Halteclip aus Kunststoff zum Festlegen von Rohren, insbesondere von Fussbodenheizungsrohren, auf einer Wärme- und/oder Trittschalldämmungsunterlage aus Kunststoff**

(30) Priorität: 04.04.2001 DE 20105940 U
(71) Anmelder: Schütz GmbH & Co. KGaA, 56242 Selters (DE)
(72) Erfinder: Schütz, Udo, 56242 Selters / Ww. (DE)
(74) Vertreter: Pürckhauer, Rolf, Dipl.-Ing.

(57) **Zusammenfassung**

Der aus Kunststoff einteilig spritzgegossene Halteclip (2) in Form eines U-förmig gebogenen, elastischen Bügels weist einen dem Außendurchmesser der Heizrohre (1) entsprechend gekrümmten Bogenabschnitt (10) und zwei Schenkel (11, 12) mit nach außen gerichteten Nasen (13, 14) zum Ansetzen eines Schlagwerkzeugs auf, die an die oberen Abschnitte (11a, 12a) der beiden Schenkel (11, 12) angeformt sind. An die mittleren Abschnitte (11b, 12b) der Schenkel (11, 12) sind nach außen gerichtete, finnenartige Widerhaken (15, 16) zum Festhaken an einer aus einem Gewebematerial bestehenden Deckschicht (8) von Dämmplatten (4, 5) der Dämmungsunterlage (3) und an die Endabschnitte (11c, 12c) der beiden Schenkel (11, 12) Widerhaken (17, 18) zum Verankern in der Unterschicht (7) der Dämmplatten (4) angeformt. Zusätzlich können an die mittleren Schenkelabschnitte (11b, 12b) des Halteclips (2) noch zwei weitere nach innen gerichtete, elastische Widerhaken (19, 20) angeformt sein.

## Beschreibung

Die Erfindung betrifft Halteclips aus Kunststoff zum Festlegen von Rohren, insbesondere von Fußbodenheizungsrohren, auf einer Wärme- und/oder Trittschalldämmungsunterlage aus Kunststoff, mit einem U-förmig gebogenen, elastischen Bügel, der einen dem Außendurchmesser der Rohre entsprechend gekrümmten Bogenabschnitt und zwei Schenkel mit nach außen gerichteten Nasen zum Ansetzen eines Schlagwerkzeugs sowie sich in der Dämmungsunterlage beim Einschlagen des Halteclips verankernden Widerhaken aufweist.

Als Wärme- und Trittschalldämmungsunterlage für Fußbodenheizungsrohre werden vorwiegend Dämmplatten aus Schaumkunststoff in zwei Ausführungsformen verwendet. Die eine Platte besteht aus einer Unterschicht aus einem geschäumten Kunststoff und einer Deckschicht, die durch eine Kunststoffolie, eine durch ein Kunststoffgewebe verstärkte Folie oder ein reines Kunststoffgewebe gebildet wird. Die andere als Sandwichplatte ausgebildete Dämmplatte wird durch eine Unterschicht aus einem geschäumten, weicheren Kunststoff, eine Oberschicht aus einem geschäumten, harten Kunststoff und eine Deckschicht aus Folienmaterial, einem durch ein Kunststoffgewebe verstärkten Folienmaterial oder einem reinen Kunststoffgewebe gebildet.

Aus der DE 43 12 806 C2 bekannte Halteclips der gattungsgemäßen Art gewährleisten eine sichere Befestigung von Fußbodenheizungsrohren auf Dämmplatten aus Schaumkunststoff, die als Sandwichplatten mit einer weicheren Unterschicht aus geschäumtem Kunststoff, einer härteren Oberschicht aus geschäumtem Kunststoff und einer Deckschicht aus Folienmaterial ausgebildet sind.

Eine vorschriftsmäßige Befestigung von Fußbodenheizungsrohren auf Dämmplatten mit einer durchgehenden Unterschicht und einer dünnen Deckschicht ist mit den bekannten Halteclips nicht möglich, da die an die mittleren Abschnitte der beiden Schenkel der Clips angeformten Widerhaken verhältnismäßig weit von den Nasen zum Ansetzen des Schlagwerkzeugs beabstandet sind, so daß die Halteclips beim Verlegen der Rohre unter äußerer Krafteinwirkung so weit aus der Dämmplatte herausgezogen werden können, bis die Widerhaken sich an der Deckschicht festhaken und somit das Rohr nur noch lose auf der Dämmplatte aufliegt.

Der Erfindung liegt die Aufgabe zugrunde, einen Halteclip der gattungsgemäßen Art zu entwickeln, der eine sichere Befestigung von Rohren, insbesondere Fußbodenheizungsrohren, auf Dämmplatten ermöglicht, die als kaschierte einfache Platten oder kaschierte Sandwichplatten aus geschäumtem Kunststoff ausgebildet sind.

Diese Aufgabe wird erfindungsgemäß gelöst durch einen Halteclip mit den Merkmalen des Patentanspruchs 1.

Die Unteransprüche beinhalten vorteilhafte und zweckmäßige Weiterbildungen der Erfindung.

Der neue Halteclip stellt eine einfache Lösung der Erfindungsaufgabe dar.

Die Erfindung ist nachstehend anhand schematischer Zeichnungsfiguren erläutert, die folgendes darstellen:
- Fig. 1: einen Halteclip zur Befestigung eines Heizrohres auf einer Dämmplatte einer Wärme- und Trittschalldämmung, wobei die Dämmplatte aus einer Unterschicht aus einem Schaumkunststoff und einer Deckschicht aus einem Gewebematerial besteht,
- Fig. 2: einen Halteclip zur Befestigung eines Heizrohres auf einer Dämmplatte, wobei die Dämmplatte als Sandwichplatte aus Kunststoff ausgebildet ist, und
- Fig. 3: eine perspektivische Darstellung des Halteclips.

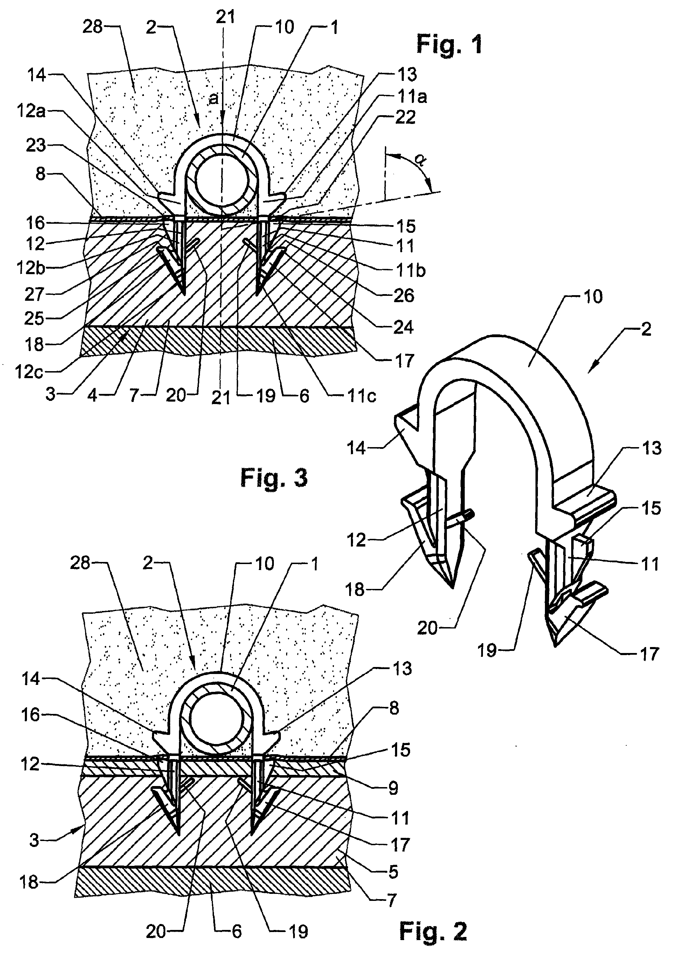

Das in den Figuren 1 und 2 dargestellte Heizrohr 1 eines Heizkreises einer Fußbodenheizung ist mittels Halteclips 2 aus Kunststoff auf Dämmplatten 4 bzw. 5 einer Wärme- und Trittschalldämmungsunterlage 3 befestigt, die auf einer Trenndecke 6 verlegt ist. Auf die Dämmungsunterlage 3 mit den verlegten Heizrohren 1 ist eine Estrichschicht 28 aufgebracht.

Die Dämmplatten 4 gemäß Figur 1 bestehen aus einer Unterschicht 7 aus Schaumkunststoff, z.B. Polystyrol, und einer Deckschicht 8 aus einem Kunstfasergewebe, und die als Sandwichplatten ausgebildeten Dämmplatten 5 nach Figur 2 bestehen aus einer Unterschicht 7 z.B. aus Polystyrol, einer Oberschicht 9 beispielsweise aus Polyuhrethan-Hartschaum und einer Deckschicht 8 aus einem Kunstfasergewebe.

Der aus Kunststoff einteilig spritzgegossene Halteclip 2 in Form eines U-förmig gebogenen, elastischen Bügels weist einen dem Außendurchmesser der Heizrohre 1 entsprechend gekrümmten Bogenabschnitt 10 und zwei Schenkel 11, 12 mit nach außen gerichteten Nasen 13, 14 zum Ansetzen eines Schlagwerkzeugs auf, die an die oberen Abschnitte 11a, 12a der beiden Schenkel 11, 12 angeformt sind.

Unmittelbar anschließend an die beiden Nasen 13, 14 sind an die mittleren Abschnitte 11b, 12b der beiden Schenkel 11, 12 des Halteclips 2 zwei nach außen gerichtete, finnenartige, starre Widerhaken 15, 16 angeformt, und an den Endabschnitten 11c, 12c der beiden Schenkel 11, 12 des Halteclips sind zwei weitere Widerhaken 17, 18 ausgebildet.

Ferner sind an die mittleren Abschnitte 11b, 12b der beiden Schenkel 11, 12 des Halteclips 2 zwei weitere, nach innen und entgegen der Einschlagrichtung a gerichtete, elastische Widerhaken 19, 20 angeformt.

Die beiden nach außen weisenden, starr ausgebildeten Widerhaken 15, 16 an den mittleren Abschnitten 11b, 12b der beiden Schenkel 11, 12 des Halteclips 2 weisen jeweils eine unter einem spitzen Winkel α zur Mittelachse 21 - 21 des Halteclips verlaufende Abstützkante 22, 23 auf, die jeweils unmittelbar unter einer Nase 13, 14 zum Ansetzen eines Schlagwerkzeugs angeordnet ist.

Die beiden entgegen der Einschlagrichtung a des Halteclips 2 nach außen weisenden, begrenzt elastischen Widerhaken 17, 18 an den Endabschnitten 11c, 12c der beiden Schenkel 11, 12 weisen schnabelförmige Enden 24, 25 mit jeweils einer im Fertigungszustand des Halteclips 2 quer zur Mittelachse 21 - 21 des Clips verlaufenden, oberen Endkante 26, 27 auf.

Die beiden nach außen weisenden Widerhaken 15, 16 an den mittleren Schenkelabschnitten 11b, 12b des Halteclips 2 sind schmaler als die beiden Nasen 13, 14 an den oberen Schenkelabschnitten 11a, 12a und die beiden Widerhaken 17, 18 an den Endabschnitten 11c, 12c der Schenkel 11, 12 des Halteclips (Fig. 3).

Im Befestigungszustand überfassen die Halteclips 2 mit dem Bogenabschnitt 10 die Heizrohre 1. Bei der Verlegung der Heizrohre auf Dämmplatten 4 gemäß Figur 1 mit einer Unterschicht 7 aus Schaumkunststoff und einer Deckschicht 8 aus einem Kunstfasergewebe haken die finnenartigen, nach außen gerichteten Widerhaken 15, 16 an der Deckschicht 8 fest, und die nach außen gerichteten Widerhaken 17, 18 an den Endabschnitten 11c, 12c der Schenkel 11, 12 und die nach innen weisenden Widerhaken 19, 20 an den mittleren Schenkelabschnitten 11b, 12b sind in der Unterschicht 7 verankert.

Beim Verlegen der Heizrohre 1 auf Dämmplatten 5 nach Figur 2, die als Sandwichplatten mit einer Unterschicht 7 aus weichem Schaumkunststoff, einer Oberschicht 9 aus einem Kunststoff-Hartschaum und einer Deckschicht 8 aus einem Kunstfasergewebe ausgebildet sind, durchdringen die finnenartigen Widerhaken 15, 16 der Halteclips 2 die Oberschicht 9 und haken an der Deckschicht 8 fest, und die Widerhaken 17, 18; 19, 20 an den Endabschnitten 11c, 12c und den mittleren Abschnitten 11b, 12b der beiden Schenkel 11, 12 sind in der Unterschicht 7 verankert.

## Patentansprüche

1. Halteclip aus Kunststoff zum Festlegen von Rohren, insbesondere von Fußbodenheizungsrohren, auf einer Wärmeund/oder Trittschalldämmungsunterlage aus Kunststoff, mit einem U-förmig gebogenen, elastischen Bügel, der einen dem Außendurchmesser der Rohre entsprechend gekrümmten Bogenabschnitt und zwei Schenkel mit nach außen gerichteten Nasen zum Ansetzen eines Schlagwerkzeugs sowie sich in der Dämmungsunterlage beim Einschlagen des Halteclips verankernden Widerhaken aufweist, **dadurch gekennzeichnet, daß** anschließend an die an den oberen Abschnitten (11a, 12a) der beiden Schenkel (11, 12) des einteiligen Halteclips (2) ausgebildeten Nasen (13, 14) an die mittleren Abschnitte (11b, 12b) der Schenkel (11, 12) nach außen gerichtete, finnenartige Widerhaken (15, 16) zum Festhaken an einer insbesondere aus einem Gewebematerial bestehenden Deckschicht (8) von Dämmplatten (4, 5) der Dämmungsunterlage (3) und an die Endabschnitte (11c, 12c) der beiden Schenkel (11, 12) Widerhaken (17, 18) zum Verankern in der Unterschicht (7) der Dämmplatten (4, 5) angeformt sind.

2. Halteclip nach Anspruch 1, **gekennzeichnet durch** an die mittleren Abschnitte (11b, 12b) und/oder die Endabschnitte (11c, 12c) der beiden Schenkel (11, 12) angeformte, nach innen gerichtete Widerhaken (19, 20) zum Verankern in der Unterschicht (7) der Dämmplatten (4, 5) aus weichem Schaumstoff und/oder einer Oberschicht (9) der Dämmplatten (5) aus hartem Schaumstoff.

3. Halteclip nach Anspruch 1 und 2, **dadurch gekennzeichnet, daß** die beiden nach außen weisenden Widerhaken (15, 16) an den mittleren Schenkelabschnitten (11b, 12b) eine unter einem spitzen Winkel (α) zur Mittelachse (21 - 21) des Halteclips entgegen der Einschlagrichtung (a) verlaufende Abstützkante (22, 23) aufweisen, die jeweils unmittelbar unter einer Nase (13, 14) zum Ansetzen des Schlagwerkzeugs angeordnet ist.

4. Halteclip nach Anspruch 3, **dadurch gekennzeichnet, daß** die beiden nach außen weisenden Widerhaken (15, 16) an den mittleren Schenkelabschnitten (11b, 12b) im wesentlichen starr ausgebildet sind.

5. Halteclip nach einem der Ansprüche 1 bis 4, **dadurch gekennzeichnet, daß** die beiden entgegen der Einschlagrichtung (a) nach außen weisenden, begrenzt elastischen Widerhaken (17, 18) an den Endabschnitten (11c, 12c) der beiden Schenkel (11, 12) schnabelförmige Enden (24, 25) mit jeweils einer im Fertigungszustand quer zur Mittelachse (21 - 21) des Halteclips (2) verlaufenden, oberen Endkante (26, 27) aufweisen.

6. Halteclip nach einem der Ansprüche 1 bis 5, **gekennzeichnet durch** eine elastische Ausbildung der beiden nach innen gerichteten Widerhaken (19, 20).

7. Halteclip nach einem der Ansprüche 1 bis 6, **dadurch gekennzeichnet, daß** die beiden nach außen weisenden Widerhaken (15, 16) an den mittleren Schenkelabschnitten (11b, 12b) des Halteclips (2) schmaler als die beiden Nasen (13, 14) an den oberen Schenkelabschnitten (11a, 12a) und die beiden Widerhaken (17, 18) an den Endabschnitten (11c, 12c) der Schenkel (11, 12) des Halteclips (2) sind.
